# EUROPÄISCHE PATENTANMELDUNG

(11) **EP 2 626 580 A2**
(43) Veröffentlichungstag der Anmeldung: **14.08.2013**
(21) Anmeldenummer: 13151404.4
(22) Anmeldetag: 16.01.2013
(51) Int. Cl.: F16D 3/62

(54) **Elastische Torsionskupplung**

(30) Priorität: 11.02.2012 DE 102012002757
(71) Anmelder: ZF Friedrichshafen AG, 88038 Friedrichshafen (DE)
(72) Erfinder: Somschor, Bernd, 88069 Tettnang (DE); Sacher, Christoph, 88048 Friedrichshafen (DE); Rothe, Joachim, 84453 Mühldorf (DE); Spaan, Wolfgang, 84559 Kraiburg am Inn (DE)

(57) **Zusammenfassung**

Eine elastische Torsionskupplung (3) umfasst in bekannter Weise einen ersten Verbindungsflansch (6) zur Verbindung mit einer drehmomentenerzeugenden Kraftquelle sowie einen zweiten Verbindungsflansch (11) zur Verbindung mit einer angetriebenen Welle oder dergleichen. Eine Vielzahl von Laschen (14) bildet, ebenfalls in bekannter Weise, einen geschlossenen Polygonzug. Die Laschen sind in einem Endbereich mit dem ersten Verbindungsflansch und im gegenüberliegenden Endbereich mit dem zweiten Verbindungsflansch kraftschlüssig verbunden. Um im Falle eines Bruches oder ähnlichen Fehlers einer Lasche weiterhin eine Drehmomentenübertragung in einem Notbetrieb ermöglichen zu können, weisen mindestens einer der Verbindungsflasche und ein mit dem jeweils anderen Verbindungsflansch verbundenes Teil (16) oder dieser andere Verbindungsflansch selbst eine solche Gestalt auf, dass der eine Verbindungsflansch gegenüber dem anderen Verbindungsflansch begrenzt über einen bestimmten Winkel verdrehbar ist.

## Beschreibung

Die Erfindung betrifft eine elastische Torsionskupplung mit
a) einem ersten Verbindungsflansch zur Verbindung mit einer drehmomentenerzeugenden Kraftquelle;
b) einem zweiten Verbindungsflansch zur Verbindung mit einer angetriebenen Welle oder dergleichen;
c) einer Vielzahl von Laschen, die in einem Endbereich mit dem ersten Verbindungsflansch und im gegenüberliegenden Endbereich kraftschlüssig mit dem zweiten Verbindungsflansch verbunden sind.

Derartige nicht schaltbare Torsionskupplungen werden zum Zwecke der Drehmomenten-übertragenden Verbindung zwischen zwei Wellenanschlüssen verbaut. Ihr Sinn besteht neben der Drehmomentenübertragung in der Schwingungsisolierung und akustischen Abkopplung der beiden Wellen voneinander.

Elastische Torsionskupplungen der eingangs genannten Art sind beispielsweise in der DE 37 34 089 A1, der DE 43 04 274 C1 oder auch der DE 10 2008 047 596 A1 beschrieben. Wenn in einer dieser bekannten Kupplungen ein Fehler in einer Lasche, beispielsweise ein Bruch, auftritt, ist eine Drehmomentenübertragung im Allgemeinen nicht mehr möglich; die Torsionskupplung fällt vollständig aus.

Aufgabe der vorliegenden Erfindung ist es, eine Torsionskupplung der eingangs genannten Art so auszugestalten, dass auch im Falle eines Versagens einer oder mehrerer Laschen zumindest ein Notlaufbetrieb mit Drehmomentenübertragung möglich ist.

Diese Aufgabe wird erfindungsgemäß dadurch gelöst, dass
d) mindestens einer der Verbindungsflansche und ein mit dem jeweils anderen Verbindungsflansch verbundenes Teil oder dieser Verbindungsflansch selbst eine solche Gestalt aufweisen, dass der eine verbindungsflansch begrenzt gegenüber dem anderen Verbindungsflansch verdrehbar ist.

Erfindungsgemäß wird also dafür gesorgt, dass die beiden Verbindungsflansche der Torsionskupplung eine gewisse Verdrehbarkeit gegeneinander aufweisen, wie dies eben für die dämpfende, mit elastischen Laschen arbeitende Torsionskupplung notwendig ist. Diese Verdrehbarkeit ist jedoch nicht unbegrenzt, sondern reicht nur etwas weiter, als dies im Normalbetrieb die elastische Dehnung der intakten Laschen erfordert. Die Verdrehbarkeit der beiden Verbindungsflansche findet bei einem bestimmten Winkelwert ihr Ende. Dieser Winkelwert ist so groß, dass er nur erreicht wird, wenn tatsächlich ein Fehler in einem oder mehreren der Laschen eintritt. Dann aber kann durch direkte Anlage des Verbindungsflansches an dem mit dem jeweils anderen Verbindungsflansch verbundenen Teil bzw. mit diesem anderen Verbindungsflansch selbst weiterhin eine Drehmomentenübertragung stattfinden, bei welcher jedoch verständlicherweise keine Dämpfungswirkung mehr eintritt. Insoweit ist ein Notlaufbetrieb der Torsionskupplung bis zu einer Reparatur möglich.

Bei einer bevorzugten Ausführungsform der Erfindung ist einer der Verbindungsflansche mit einer Mehrzahl von radial verlaufenden Armen versehen, wobei zwischen benachbarten Armen jeweils ein Freiraum verbleibt, in den das mit dem jeweils anderen Verbindungsflansch verbundene Teil oder der andere Verbindungsflansch selbst eingreift. Auf diese Weise werden im Notlaufbetrieb die Drehmomente an einer entsprechenden Mehrzahl von Stellen vom einen zum anderen Verbindungsflansch übertragen.

Im einfachsten Falle ist das mit dem jeweils anderen Verbindungsflansch verbundene Teil einfach der Endbereich mindestens eines Bolzens, mit dem eine Lasche in einem Erdbereich an dem jeweils anderen Verbindungsflansch befestigt ist. Es werden hier zur Bildung der Verdrehsicherung keine zusätzlichen Elemente benötigt.

Alternativ kann das mit dem jeweils anderen Verbindungsflansch verbundene Teil ein mit mindestens einem radial nach innen verlaufenden Arm versehener Anschlagflansch sein. Dies ist eine konstruktive Variante, die zwar mit dem Anschlagflansch ein zusätzliches Element benötigt, insgesamt aber robuster ist.

Besonders günstig ist, wenn Laschen in Umfangsrichtung abwechselnd auf gegenüberliegenden Seiten eines radial verlaufenden Bereichs eines Verbindungsflansches angeordnet sind. In diesem Falle wirken auf die Bolzen, mit denen die Laschen befestigt sind, kleinere Biegemomente.

Eine größere Kapazität weist diejenige Ausgestaltung der Erfindung auf, bei welcher die Torsionskupplung aus zwei Einzel-Torsionskupplungen zusammengesetzt ist, die im Wesentlichen baugleich symmetrisch zu einer Mittelebene und kräftemäßig parallel angeordnet sind.

Schließlich empfiehlt es sich, dass die Torsionskupplung bis auf die Öffnungen, die zum Erreichen der Verbindungsflansche erforderlich sind, gekapselt ist. Die äußeren Einflüsse insbesondere auf die Laschen werden auf diese Weise minimiert.

Ausführungsbeispiele der Erfindung werden nachfolgend anhand der Zeichnung näher erläutert; es zeigen
- Figur 1: perspektivisch eine Doppel-Torsionskupplung zur Verwendung bei Schienenfahrzeugen;
- Figur 2: eine Detailvergrößerung aus Figur 1.;
- Figur 3: einen Axialschnitt durch die Torsionskupplung von Figur 2;
- Figur 4: perspektivisch eine alternative Ausführungsform einer Torsionskupplung für Schienenfahrzeuge;
- Figur 5: die Doppel-Torsionskupplung von Figur 4 perspektivisch, jedoch unter einem anderen Winkel als in Figur 4;
- Figur 6: einen Axialschnitt durch die in Figur 5 rechts gezeichnete Torsionskupplung;
- Figur 7: perspektivisch eine dritte Ausführungsform einer Doppel-Torsionskupplung für Schienenfahrzeuge;
- Figur 8: eine Detailvergrößerung aus Figur 7, wobei jedoch einige Komponenten abgenommen sind;
- Figur 9: eine Ansicht ähnlich der Figur 8, in der andere Komponenten abgenommen sind;
- Figur 10: einen Axialschnitt durch die in den Figuren 8 und 9 dargestellte Torsionskupplung;
- Figur 11: perspektivisch ein weiteres Ausführungsbeispiel einer Doppel-Torsionskupplung für Schienenfahrzeuge;
- Figur 12: eine Detailvergrößerung aus Figur 11, wobei jedoch eine Komponente abgenommen ist;
- Figur 13: eine Ansicht, ähnlich der Figur 12, in der weitere Komponenten abgenommen sind;
- Figur 14: einen Axialschnitt durch die in den Figuren 12 und 13 dargestellte Torsionskupplung;
- Figur 15: perspektivisch eine Torsionskupplung, die Teil einer Doppel-Torsionskupplung für Schienenfahrzeuge sein kann, teilweise aufgebrochen;
- Figur 16: einen Axialschnit durch die Torsionskupplung der Figur 15.

Soweit die nachfolgend beschriebenen Ausführungsformen von Torsionskupplungen von Komponenten Gebrauch machen, welche einander funktional entsprechen, werden diese mit demselben Bezugszeichen, jedoch von Ausführungsform zu Ausführungsform jeweils um 100 erhöht, gekennzeichnet.

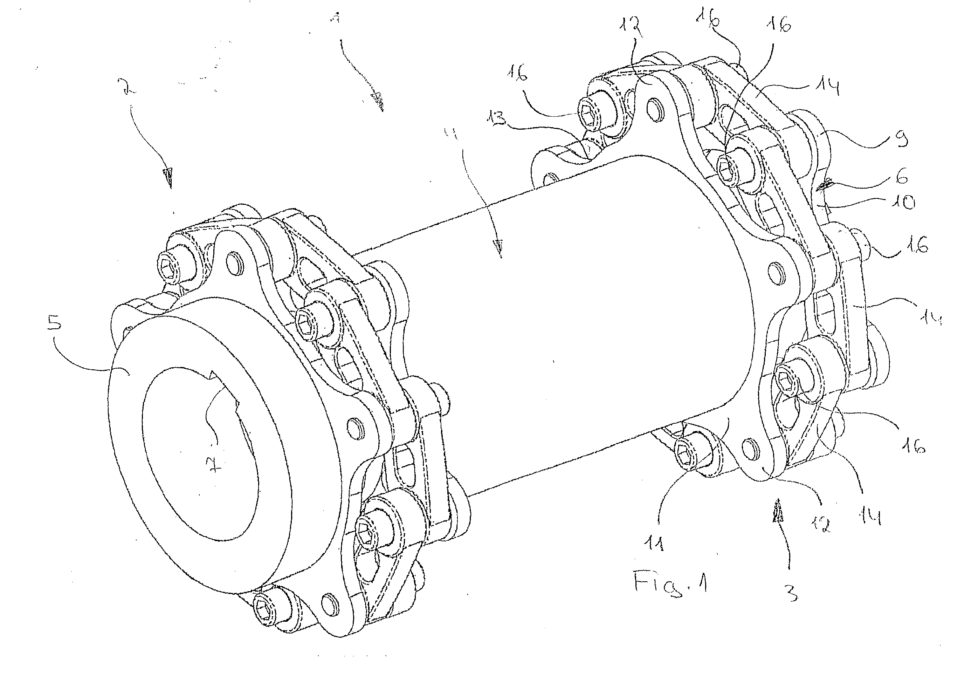

Zunächst wird auf die Figuren 1 bis 3 Bezug genommen, in den ein erstes Ausführungsbeispiel einer Doppel-Torsionskupplung dargestellt ist, wie sie zwischen einem Getriebe und einer angetriebenen Radsatzwelle von Schienenfahrzeugen eingesetzt wird. Sie ist insgesamt mit dem Bezugszeichen 1 gekennzeichnet. Sie umfasst zwei im Wesentlichen identisch aufgebaute Torsionskupplungen 2, 3, die über ein rohrförmiges Zwischenstück 4 miteinander verbunden sind.

Beide Torsionskupplungen 2, 3 haben einen äußeren Verbindungsflansch 5, 6. Die anzutreibende Radsatzwelle wird durch die ganze Doppel-Torsionskupplung 1 hindurchgeführt, also durch den ersten äußeren Verbindungsflansch 5, die erste Torsionskupplung 2, das Verbindungsstück 4, die zweite Torsionskupplung 3 sowie den zweiten äußeren Verbindungsflansch 6.

Der in Figur 1 links dargestellte äußere Verbindungsflansch 5, welcher zur Torsionskupplung 2 gehört, besitzt eine Nut 7. Diese arbeitet bei auf der Radsatzwelle montierter Doppel-Torsionskupplung 1 mit einer entsprechenden Feder auf der Radsatzwelle zusammen, so dass eine drehschlüssige Verbindung zwischen der Radsatzwelle und dem äußeren Verbindungsflansch 5 gegeben ist.

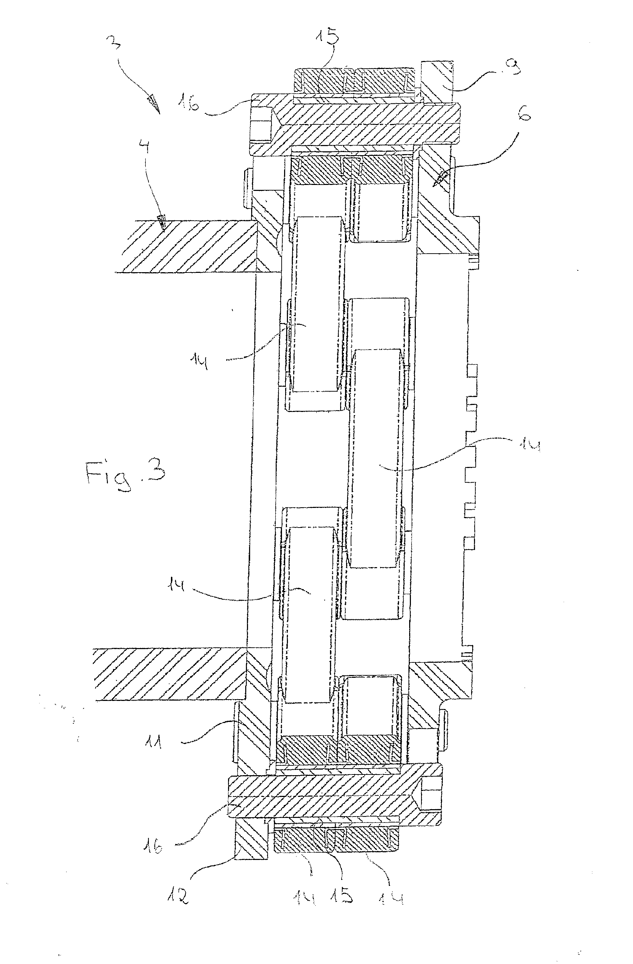

Der gegenüberliegende, am besten in Figur 3 erkennbar äußere Verbindungsflansch 6 besitzt eine stirnseitige Verzahnung 8, die mit einer entsprechenden Verzahnung auf der Ausgangswelle des nicht dargestellten Getriebes kämmt.

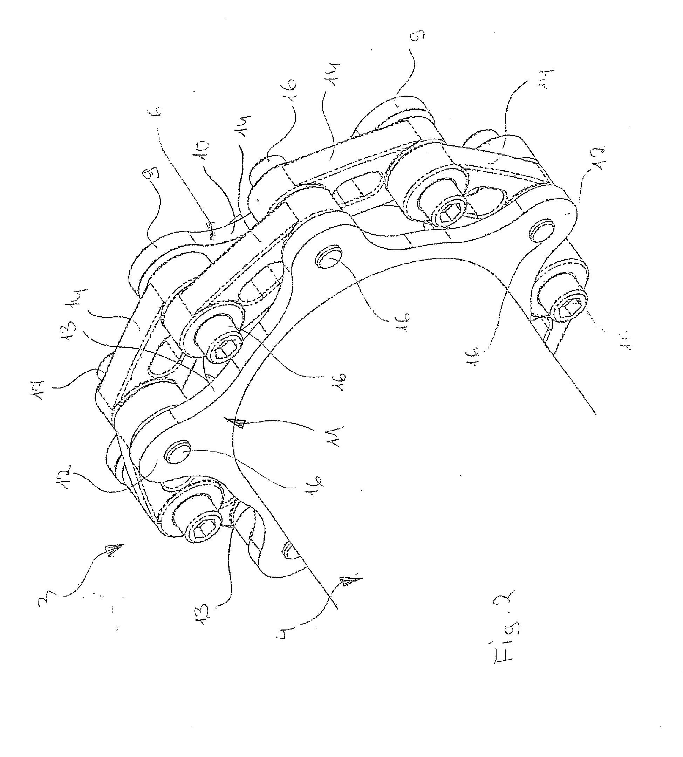

Da beide Torsionskupplungen 2, 3 wie oben schon erwähnt, bis auf die Ausgestaltung der äußeren verbindungsflansche 5, 6 im Wesentlichen identisch sind, erfolgt die weitere Beschreibung dieser beiden Torsionskupplungen 2, 3 anhand der Figuren 2 und 3 nur für die in Figur 1 rechts dargestellte Torsionskupplung 3.

An den äußeren Verbindungsflansch 6 sind, vorzugsweise einstückig, mehrere radial verlaufende Arme 9 angeformt. Im dargestellten Ausführungsbeispiel handelt es sich um sechs Arme 9, die jeweils mit ihren Nachbarn einen Winkel von 60° einschließen. Zwischen den Armen 9 verbleibt jeweils in Umfangsrichtung gesehen ein Freiraum 10.

Auf der innenliegenden, also dem Verbindungsstück 4 zugewandten Seite, besitzt die Torsionskupplung 3 einen inneren plattenförmigen Verbindungsflansch 11, der mit dem Verbindungsstück 4 drehschlüssig verbunden, beispielsweise verschweißt, ist. Auch hier wäre grundsätzlich eine einstückige Verbindung denkbar. Der innere Verbindungsflansch 11 besitzt ebenso wie der äußere Verbindungsflansch 6 mehrere, im vorliegenden Falle sechs, radial verlaufende Arme 12, zwischen denen in Umfangsrichtung gesehen Freiräume 13 verbleiben.

Die Übertragung von Drehmomenten von dem äußeren Verbindungsflansch 6 zu dem inneren Verbindungsflansch 11 und damit zum Verbindungsstück 4 erfolgt durch eine Vielzahl von Laschen 14. Grundsätzlich können die Laschen 14 jede beliebige Bauweise besitzen, soweit sie die zur Dämpfung erforderlichen elastischen Eigenschaften haben. Bevorzugt werden jedoch solche Laschen 14, die einen elastomeren Körper umfassen, in welches ein kräfteübertragendes Fadenpaket eingebettet ist. Die prinzipielle Bauweise einer derartigen Lasche 14 ist beispielsweise in der DE 35 26 273 C3 bechrieben, worauf Bezug genommen wird. Jede Lasche 14 besitzt zwei als Befestigungselemente dienende, von der einen zur anderen Stirnseite gehende Buchsen 15, die als Verschraubungspunkte dienen.

Im Einzelnen ist die Anordung folgende:

Beginnt man mit der Beschreibung an dem in Figur 2 oben liegenden, mit dem Bezugszeichen 9 versehenen Arm des äußeren Verbindungsflansches 6, so erkennt man, dass an diesem mittels eines Bolzens 16 zwei Laschen 14 befestigt sind, die sich in Umfangsrichtung in entgegengesetzte Richtungen erstrecken. Die gegenüberliegenden Endbereiche dieser Laschen 14 sind mit weiteren Bolzen 16, die in Gewindebohrungen der Arme 12 des inneren Verbindungsflansches 11 eingedreht sind, an jeweils einem der Arme 12 befestigt. Diese Folge von Laschen 14, die abwechselnd einen Arm 9 des äußeren Verbindungsflansches 6 mit einem Arm 12 des inneren Verbindungsflansches 11 verbinden, setzt sich über den gesamten Umfang der Torsionskupplung 3 fort. Die dargestellte Torsionskupplung 3 besitzt auf diese Weise insgesamt zwölf solche Laschen 14.

Wird der äußere Verbindungsflansch 6, in Figur 2 von außen gesehen, im Uhrzeigersinn angetrieben, so werden über die in Bewegungsrichtung nachlaufenden Laschen 14 jeweils Zugkräfte übertragen. Der innere Verbindungsflansch 11 steht somit in Drehverbindung mit dem äußeren Verbindungsflansch 6, die allerdings nicht starr ist, sondern aufgrund der elastischen Natur der verschiedenen Laschen 14 in einer gewissen Weise nachgiebig ist, wie dies durch eine spezifische Kennlinie der einzelnen Laschen 14 vorgegeben ist. Diese Verhältnisse bei Torsionskupplungen sind dem Fachmann bekannt.

Die Köpfe der Bolzen 16, welche in die Freiräume 13 zwischen den Armen 12 des inneren Verbindungsflansches 11 hineinragen, stellen eine Verdrehsicherung zwischen dem äußeren Verbindungsflansch 6 und dem inneren Verbindungsflansch 11 dar. Normalerweise kommen diese Köpfe nicht in Anlage an seitliche Flächen der Arme 12; dies wird durch die Laschen 14 verhindert, so lange keine Fehler in der Torsionskupplung 3 aufgetreten sind. Sollte es jedoch zu Fehlern in einer oder mehreren Laschen 14, beispielsweise einem Bruch kommen, so würde sich der äußere Verbindungsflansch 6 gegenüber dem inneren Verbindungsflansch 11 verdrehen können, bis schließlich die Köpfe der Bolzen 16 an jeweils einer seitlichen Fläche eines Armes 12 anliegen würden. Auf diese Weise ließe sich also auch bei einem Laschenbruch Drehmomente auf das Zwischenstück 4 übertragen, wenn auch ohne die dämpfende Wirkung, deretwegen eine Torsionskupplung 3 eingesetzt wird.

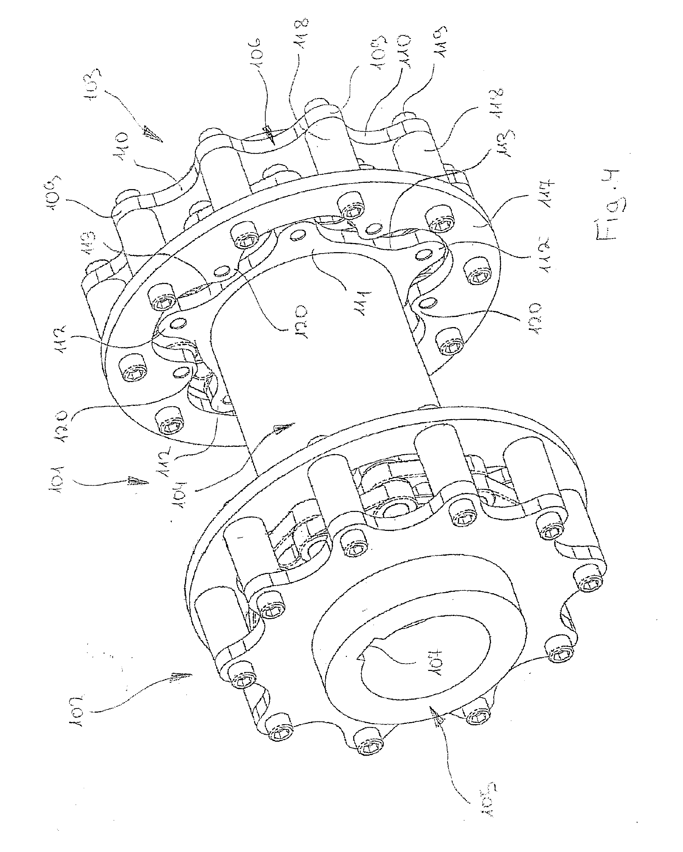

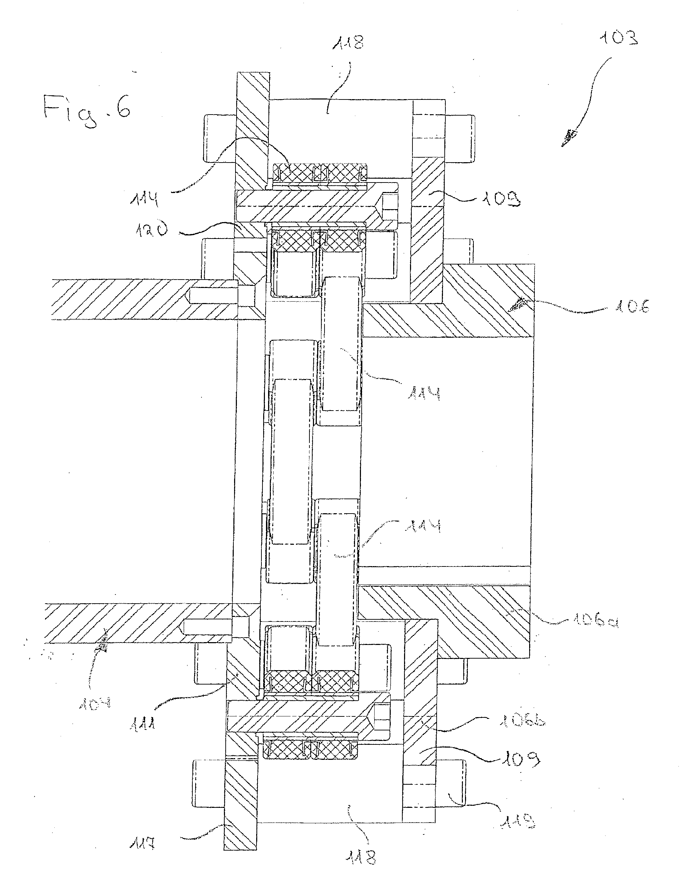

Die in den Figuren 4 bis 6 dargestellte Ausführungsform einer Doppel-Torsionskupplung 101 unterscheidet sich im Wesentlichen nur in der Bauweise der Verdrehsicherung von der oben beschriebenen. Sie umfasst zwei Torsionskupplungen 102, 103, die durch ein Verbindungsstück 104 miteinander verbunden sind. Der äußere Verbindungsflansch 105 dient zur Verbindung der Torsionskupplung 102 mit der angetriebenen Radsatzelle und der äußere Verbindungsflansch 106 der Torsionskupplung 103 steht in drehschlüssiger Verbindung mit der Ausgangswelle eines Getriebes.

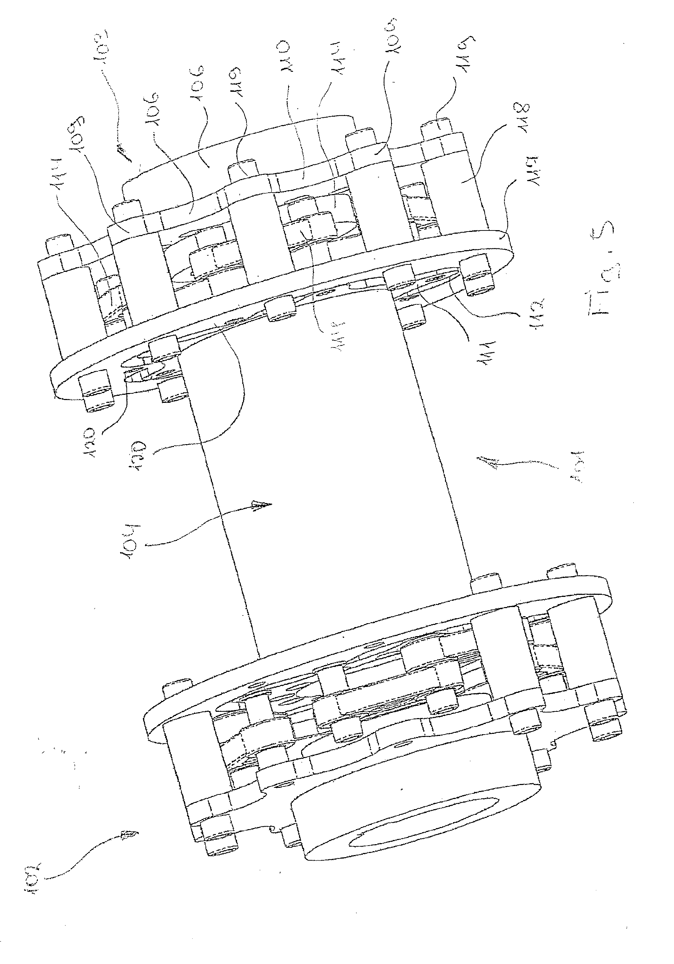

Zur weiteren Beschreibung wird ausschließlich auf die in den Figuren 4 und 5 rechts dargestllete Torsionskupplung 103 Bezug genommen, deren Bauweise im Wesentlichen mit derjenigen der Torsionskupplung 102 übereinstimmt.

Der äußere Verbindungsflansch 106 der Torsionskupplung 103 besitzt ebenso wie der äußere Verbindungsflansch 6 der oben beschriebenen Torsionskupplung 4 sich radial nach außen ertreckende Arme 109, wobei jedoch die Zwischenräume 10 zwischen den Armen 109 nicht so tief reichen wie beim ersten Ausführungsbeispiel.

Parallel zum äußeren Verbindungsflansch 106 ist ein ringförmiger Anschlagflansch 117* angeordnet, der durch kreiszylindrische Abstandsstücke 118 im richtigen Abstand von dem äußeren Verbindungsflansch 106 gehalten wird. Die Anordnung aus dem äußeren Verbindungsflansch 106, den Abstandsstücken 118 und dem Anschlagflansch 117 wird durch Bolzen 119 zusammengehalten, welche durch diese Flansche 106, 111 hindurch in die Abstandsstücke 118 eingeschraubt sind.

Der äußere Verbindungsflansch 106 ist bei diesem Auführungsbeispiel zweiteilig: Er setzt sich aus einem im Wesentlichen hohlzylindrischen Kragen 106a und einer an diesem mittels Schrauben befestigten ringförmigen Scheibe 106b zusammen, die an ihrem Außenumfang mit den Armen 109 versehen ist.

Der ringförmige Anschlagflansch 117 ist an seinem Innenumfang mit nach innen ragenden Armen 120 versehen. Diese ragen, wie insbesondere die Figur 4 zeigt, jeweils in die Freiräume 113 zwischen den Armen 112 des inneren Verbindungsflansches 111 ein. Letzterer ist in derselben Weise wie beim ersten Ausführungsbeispiel gestaltet und drehschlüssig mit dem Verbindungsstück 104 verbunden.

Der Anschlagflansch 117 und der radial innerhalb von diesem liegende innere Verbindungsflansch 111 sind nunmehr in einer ähnlichen Weise miteinander durch eine Vielzahl Laschen 114 miteinander verbunden, wie dies beim ersten Ausführungsbeispiel der äußere Verbindungsflansch 6 mit dem inneren Verbindungsflansch 11 war: Die Laschen 114 erstrecken sich jeweils zwischen einem Arm 112 des inneren Verbindungsflansches 11 und einem Arm 120 des Anschlagflansches 117. Sie bilden auf diese Weise eine Art geschlossenen Polygonzug, wobei die Ecken dieses Polygonzuges abwechselnd auf einem Arm 112 des inneren Verbindungsflansches 11 und einem Arm 120 des Anschlagflansches 117 liegen.

Der Kraftfluss im Betrieb der Torsionskupplung 103 ist wie folgt: Das Drehmoment wird von dem nicht dargestellten Getriebe auf den Kragen 106a des äußeren Verbindungsflansches 106 und damit auch auf das scheibenförmige Teil 106b übertragen. Der Kraftfluss geht dann weiter über die Bolzen 119 und die Abstandsstücke 118 auf den Anschlagflansch 117, von dort über die verschiedenen Laschen 114 auf den inneren Verbindungsflansch 111 und somit auf das Verbindungsstück 104.

Im Normalbetrieb, solange also die Laschen 114 intakt sind, kommen die Seitenflächen der Arme 120 des Anschlagflansches 117 nie in Berührung mit den Seitenflächen der Arme 112 des inneren Verbindungsflansches 111. Sollten jedoch eine oder mehrere der Laschen 114 brechen und die Kraftübertragung über diese Laschen 114 nicht mehr möglich sein, so nähern sich die Seitenflächen der Arme 120 an die Seitenflächen der Arme 112 an, bis sie schließlich dort anliegen und auf diese Weise in direktem Kontakt das Drehmoment übertragen können. So ergibt sich eine Notlauf-Eigenschaft der Torsionskupplung 103, bei welcher allerdings keine Dämpfungsfunktion mehr erzielt wird.

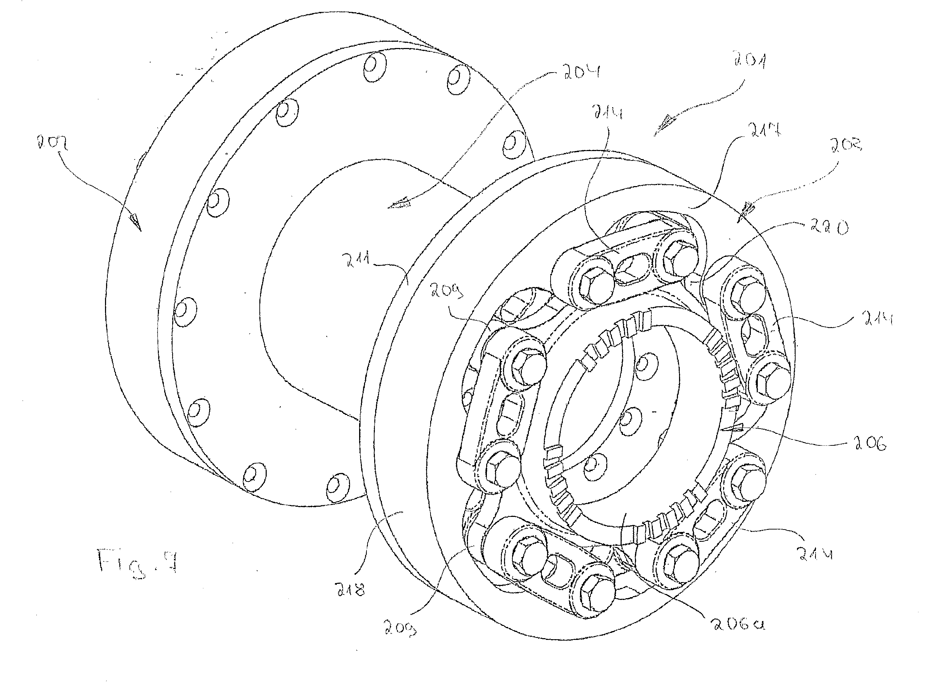

Die in den Figuren 7 bis 10 dargestellte Ausführungsform einer Doppel-Torsionskupplung 201 ähnelt in vielerlei Hinsicht der Ausführungsform nach den Figuren 4 bis 6. Die beiden Torsionskupplungen 202 und 203 sind wieder durch ein Zwischenstück 204 miteinander verbunden. Es genügt, die Torsionskupplung 203 zu beschreiben, deren Bauweise im Wesentlichen mit der Bauweise der Torsionskupplung 202 übereinstimmt.

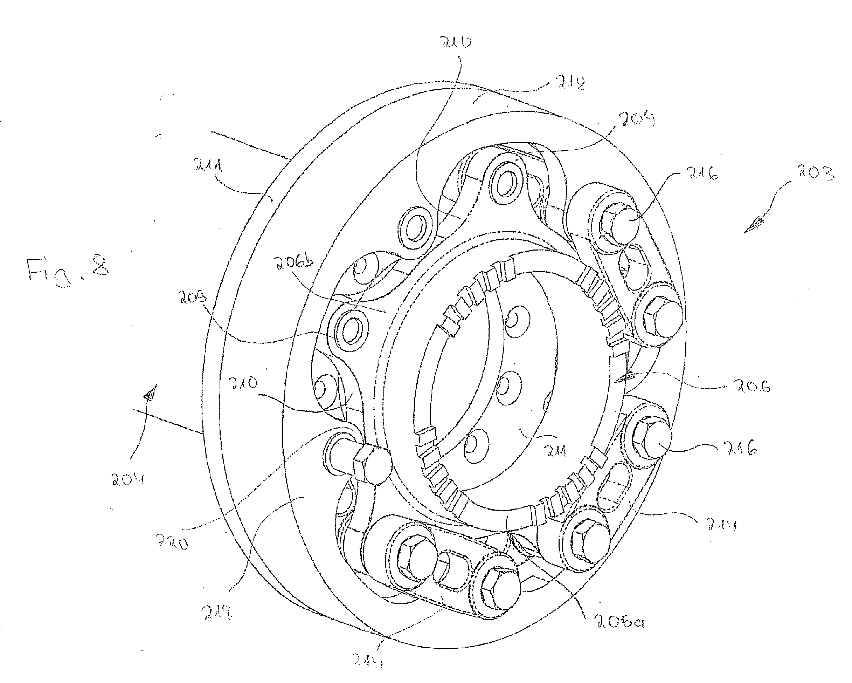

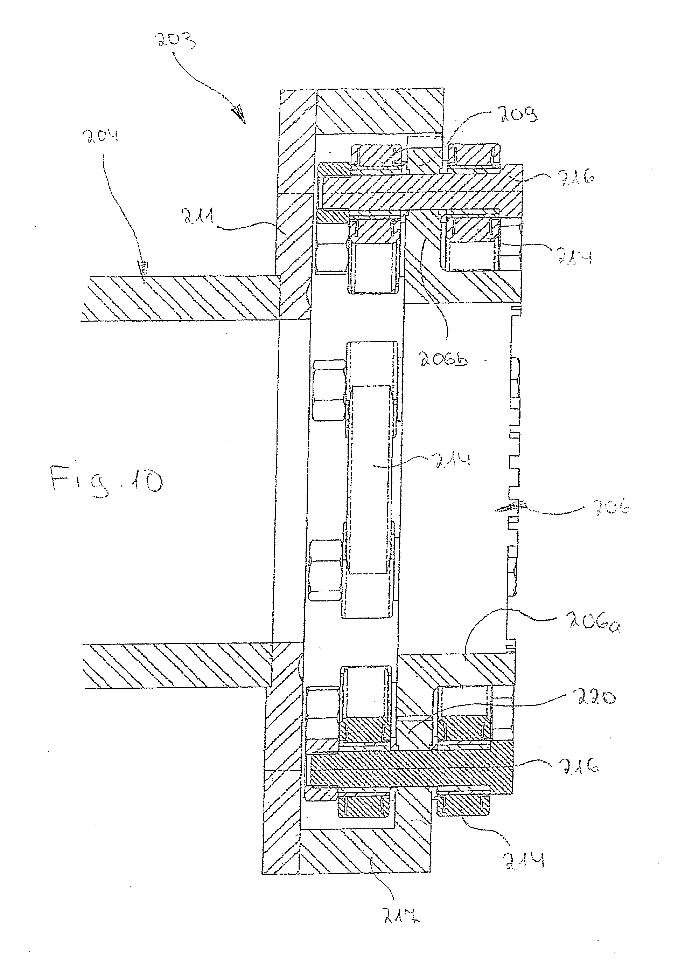

In der perspektivischen Ansicht der Figur 7 fällt der Blick auf das Ende der Torsionskupplung 203, welches mit dem Getriebe verbunden wird. Erkennbar ist insbesondere der äußere Verbindungsflansch 206, der sich aus dem eine Verzahnung tragenden Kragen 206a und einer ringförmigen Scheibe 206b (vgl. Figur 10) zusammensetzt. Die Gestalt des äußeren Verbindunsflansches 206 ist in Figur 8 deutlicher erkennbar, da dort einige Komponenten, die in fertig montiertem Zusand gemäß Figur 7 den Blick verwehren, abgenommen sind.

Radial außerhalb der Scheibe 206b des äußeren Verbindungsflansches 206 befindet sich ein ringförmiger Anschlagflansch 217 mit nach innen ragenden Armen 220. Der Anschlagflansch 217 ist in diesem Falle, wie der Schnitt der Figur 10 ausweist, als Winkelstück mit einem achsparallelen hohlzylindrischen Bereich ausgebildet, der an dem inneren Verbindungsflansch 211 in geeigneter Weise befestigt, beispielsweise angeschweißt oder angeschraubt, ist. Der innere verbindungsflansch 211 besitzt bei diesem Ausführungsbeispiel selbst keine Arme.

Der äußere Verbindungsflansch 206, insbesondere dessen an der Scheibe 206b ausgebildete Arme 209, sind nunmehr wieder mit den nach innen ragenden Armen 220 des Anschlagflansches 217 über eine Vielzahl von Laschen 214 verbunden. Erneut ist die Anordnun so, dass jede Lasche 214 mit einem Endbereich an einem Arm 220 des Anschlagflansches 218 und mit dem anderen Endbereich an einem Arm 209 des äußeren Verbindungsflansches 206 befestigt ist. Allerdings befinden sich die Laschen 214 abwechselnd auf gegenüberliegenden Seiten der Scheibe 106b bzw. des Anschlagflansches 217.

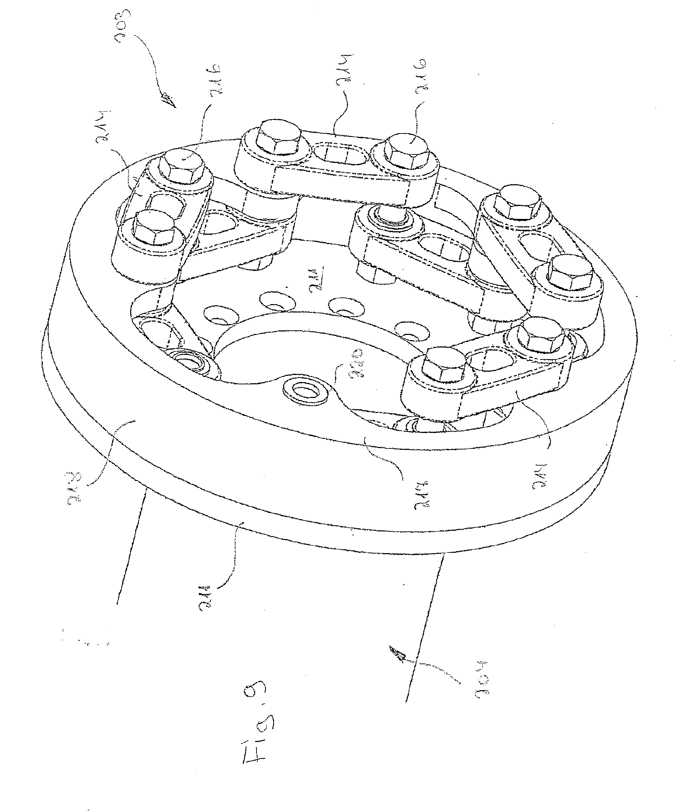

Die Verhältnisse werden durch die Betrachtung der Figuren 7 bis 9 deutlich: In Figur 7, welche dem montierten Zustand der Torsionskupplung 203 entspricht, sind nur die außen liegenden Laschen 214 erkennbar. In Figur 8 ist ein Teil dieser Laschen 214 abgenommen, so dass das Ineinandergreifen der Scheibe 206b mit dem Anschlagflansch 217 besser erkennbar wird. Die Figur 9 schließlich zeigt bei abgenommenen äußerem Verbindungsflansch 206 das "Gerüst" von Laschen 214. Schließlich ist insbesondre auch der Figur 10 zu entnehmen, wie die Laschen 214 abwechselnd innerhalb und außerhalb der Scheibe 206b bzw. des Anschlagflansches 217 angeordnet sind.

Die Übertragung des Drehmomentes von dem äußeren Verbindungsflansch 206 auf das Zwischenstück 204 geschieht bei der Torsionskupplung 203 in derselben Weise wie bei den zuvor beschriebenen Ausführungsbeispielen. Ein Vorteil der Bauweise nach den Figuren 7 bis 10 ist darin zu sehen, dass die Biegemomente auf die Bolzen 216, mit denen die Laschen 214 an den entsprechenden Teilen befestigt sind, geringer sind.

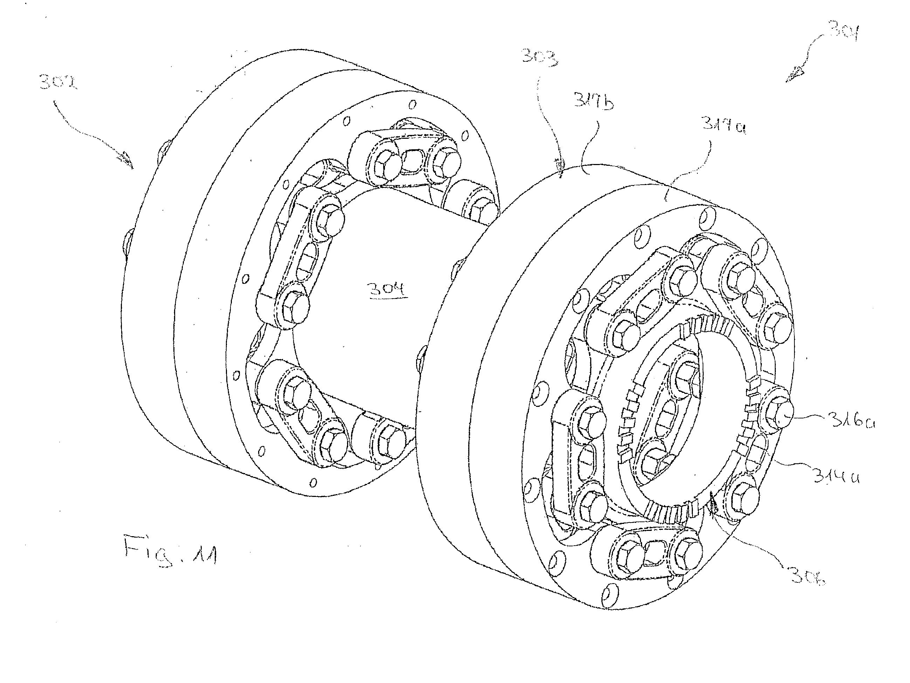

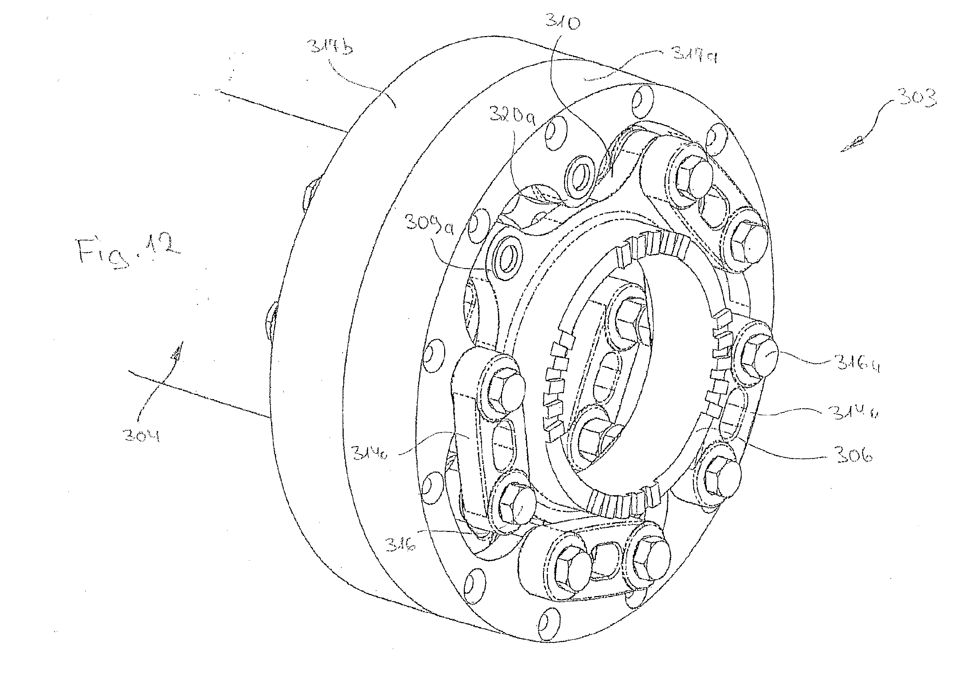

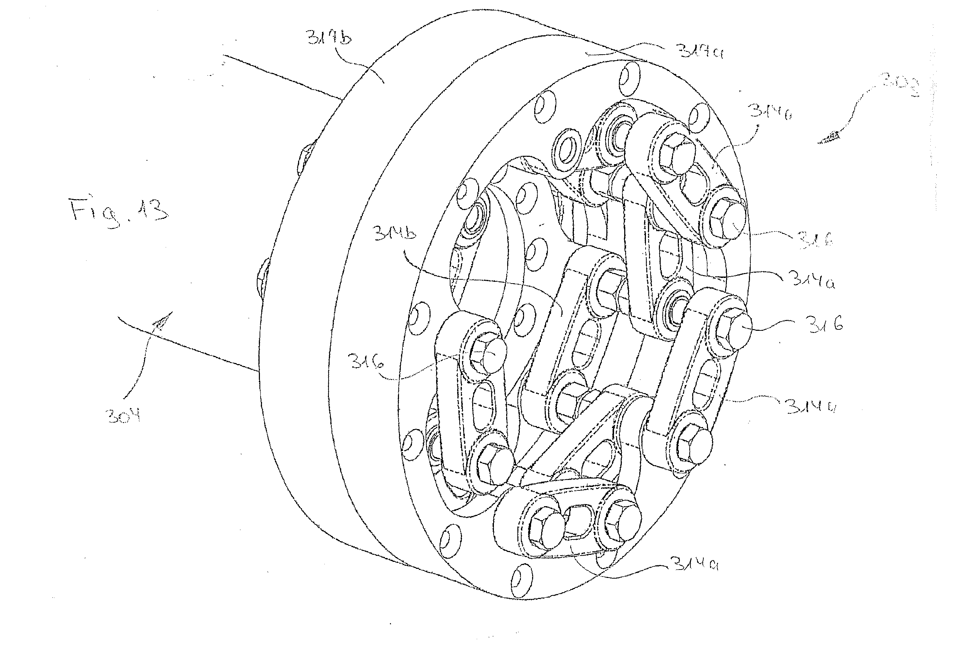

Die in den Figuren 11 bis 14 dargestellte Doppel-Torsionskupplung 301 besitzt zwei über ein Zwischenstück 304 miteinander verbundene Torsionskupplungen 302 und 303. Jede dieser Torsionskupplungen 302 und 303 stellt in gewissem Sinne, wie die nachfolgend deutlich wird, eine Verdopplung der Torsionskupplungen 202, 203 der Figuren 7 bis 9 dar.

Die nachfolgende Beschreibung beschränkt sich auf die Torsionskupplung 303, deren Bauweise weitestgehend mit der Bauweise der Torsionskupplung 302 übereinstimmt.

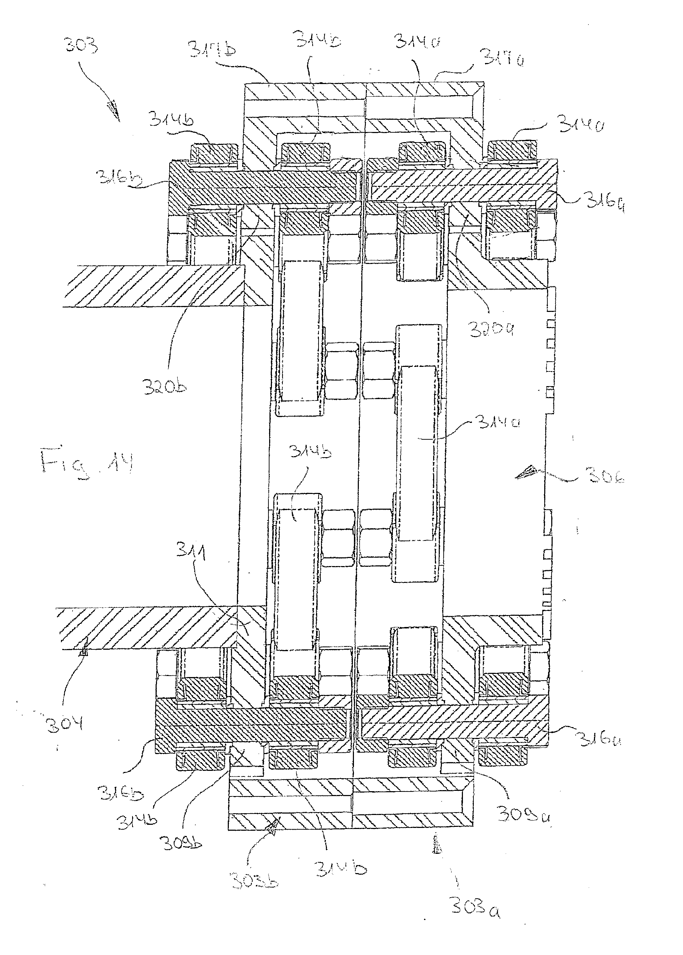

Wie insbesondere die Figur 14 deutlich macht, umfasst die Torsionskupplung 303 zwei zu ihrer Mittelebene, die senkrecht auf der Achse steht, im Wesentlichen symmetrische Einzelkupplungen 303a, 303b. Die Bauweise der in Figur 14 rechten Einzelkupplung 303a stimmt fast vollständig mit der Bauweise der Torsionskupplung 203 überein, die oben anhand der Figuren 7 bis 10 beschrieben ist.

Ein erster Unterschied besteht darin, dass der äußere Verbindungsflansch 306 des Ausführungsbeispieles nach den Figuren 11 bis 14 einstückig und nicht aus einem gesonderten Kragen und einer gesonderten Scheibe zusammengesetzt ist.

Zum Zeiten ist der innere Verbindungsflansch 211 der oben beschriebenen Ausführungsform einer Torsionskupplung 203 entfallen. Statt dessen schließt sich in spiegelbildlicher Anordnung die zweite Einzelkupplung 303b an. Die Einzelkupplung 303b besitzt den mit dem Verbindunsstück 304 verbundenen inneren Verbindungsflansch 311, welcher dem äußeren Verbindungsflansch 306 der Einzelkupplung 303a entspricht.

Beide Einzelkupplungen 303a und 303b sind kräftemäßig dadurch miteinander verbunden, dass die achsparallelen hohlzylindrischen Bereiche der Anschlagflansche 317a und 317b mittels Bolzen aneinander befestigt sind. In Figur 14 sind nur die Durchgangsbohrungen für diese Bolzen zu erkennen.

Der Kraftfluss in der Torsionskupplung 303 geschieht wie folgt:

Das von dem nicht dargestellten Getriebe in den äußeren Verbindungsflansch 306 eingeleitete Drehmoment wird in der oben schon mehrfach beschriebenen Weise über die Laschen 314a in den Anschlagflansch 317a der Einzelkupplung 303a, von dort auf den Anschlagflansch 317b der Einzelkupplung 303b und weiter über die Laschen 314b auf den inneren Verbindungsflansch 311 und schlussendlich in das Verbindungsstück 304 übertragen. Die ineinandergreifenden Arme 309a und 320a des äußeren Verbindungsflansches 306 bzw, des Anschlagflansches 318a bilden eine erste Verdrehsicherung für den Notfall. In ähnlicher Weise bilden die ineinandergreifenden Arme 309b und 320b des inneren Verbindungsflansches 311 und des Anschlagflansches 318b eine zweite Verdrehsicherung.

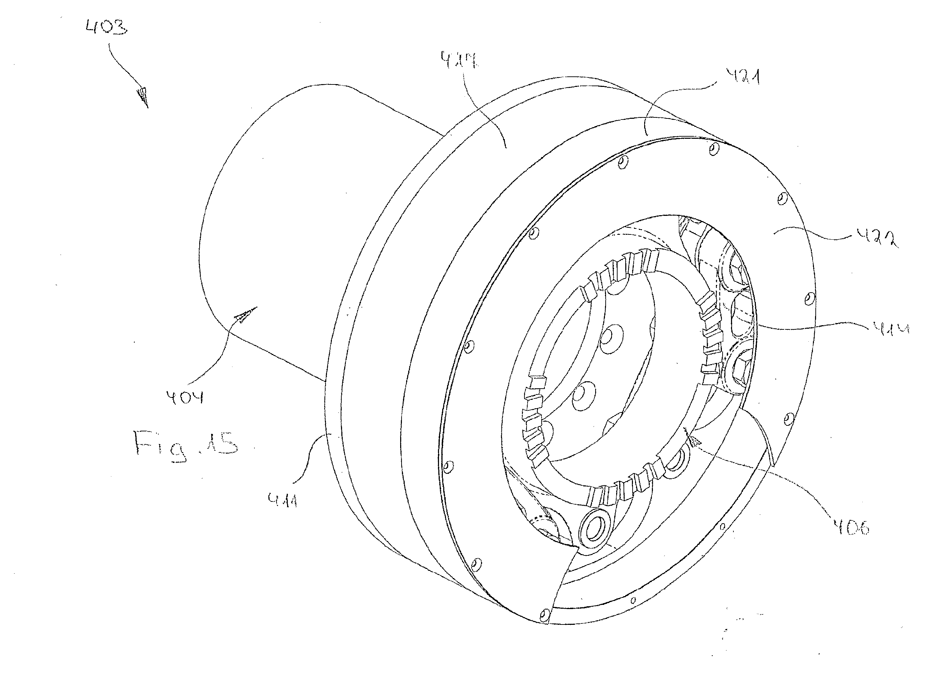

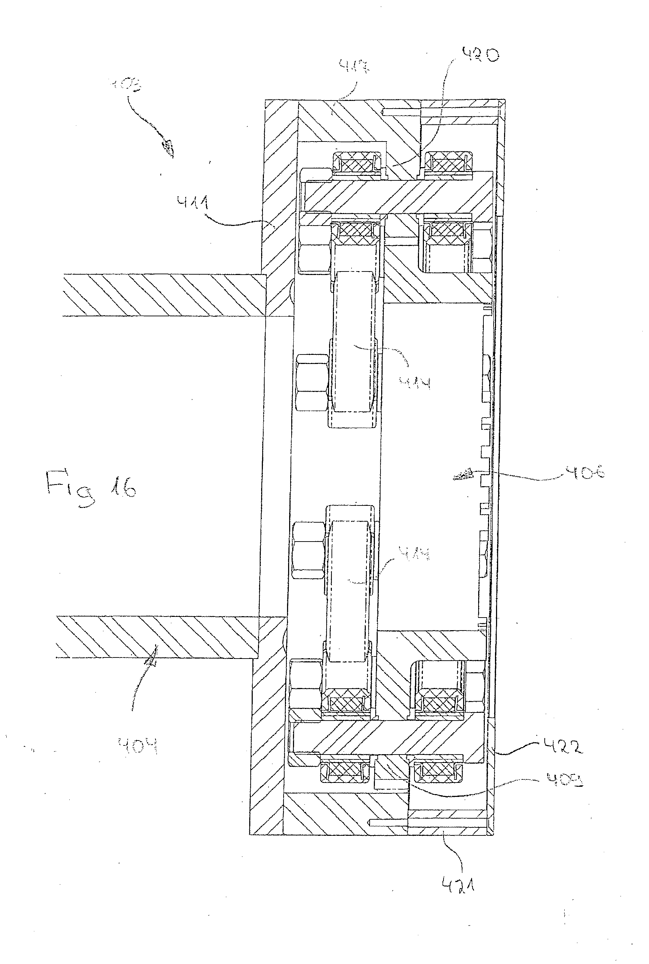

Die Betrachtung der perspektivischen Darstellungen der Torsionskupplungen nach den Figuren 7 bis 14, die oben schon beschrieben wurden, macht deutlich, dass dort bereits eine weitgehende Einkapselung aller relevanter Bauteile vorliegt, sieht man von außenliegenden Laschen ab. Diese Einkapselung kann vervollständigt werden, wie dies für die Torsionskupplung 403 in den Figuren 15 und 16 dargestellt ist. Die Vervollständigung der Verkapselung geschieht zunächst mit Hilfe eines hohlzylindrischen Ringes 421, dessen Außenradius mit dem Außenradius des Anschlagflansches 417 übereinstimmt und der an diesem angeschraubt ist. Dieser hohlzylindrische Ring 421 ragt in axialer Richtung über die außenliegenden Laschen 414 hinaus.

An der Stirnseite des hohlzylindrischen Ringes 421 ist eine Ringscheibe 422 angeschraubt, die in radialer Richtung nach innen bis nahe an den Kragen 406a des äußeren Verbindungsflansches 406 heranreicht.

Es ist deutlich zu erkennen, wie auf diese Weise die innenliegenden Komponenten der Torsionskupplung 403 gegenüber äußeren Einflüssen abgeschirmt sind. Dies ist gerade bei Schienenfahrzeugen von grosser Bedeutung, wo die Kupplungen unmittelbar über dem Gleisbett angeordnet und dadurch natürlich auch Steinschlag und sonstigen widrigen Umwelteinflüssen ausgesetzt sind.

Die obige Beschreibung erfolgte anhand von Doppel-Torsionskupplungen, machte aber gleichzeitig deutlich, dass die beschriebenen Kanstruktionsprinzipien grundsätzlich auch bei Einzel-Torsionskupplungen anwendbar sind.

## Patentansprüche

1. Elastische Torsionskupplung mit
a) einem ersten Verbindungsflansch zur Verbindung mit einer drehmomentenüberzeugenden Kraftquelle;
b) einem zweiten Verbindungsflansch zur Verbindung mit einer angetriebenen Welle oder dergleichen;
c) einer Vielzahl von Laschen, die in einem Endbereich jeweils mit dem ersten Verbindungsflansch und im gegenüberliegenden Endbereich kraftschlüssig mit dem zweiten Verbindungsflansch verbunden sind;
**dadurch gekennzeichnet, dass**
d) mindestens einer der Verbindungsflansche (6, 11; 106, 111; 206, 211; 306, 11; 406, 411) und ein mit dem jeweils anderen Verbindungsflansch (6, 11; 106, 111; 206, 211; 306, 311; 406, 411) verbundenes Teil (16; 120; 220; 320; 420) oder dieser Verbindungsflansch selbst eines solche Gestalt aufweisen, dass der eine Verbindungsflansch (6, 11; 106, 111; 206, 211; 306, 311; 406, 411) begrenzt gegenüber dem anderen Verbindungsflansch (6, 11; 106, 111; 206, 211; 306, 311; 406, 411) verdrehbar ist.

2. Elastische Torsionskupplung nach Anspruch 1, **dadurch gekennzeichnet, dass** einer der Verbindungsflansche (11; 111; 206; 306; 406) eine Mehrzahl von radial verlaufenden Armen (12; 112; 209; 309; 409) aufweist, wobei zwischen benachbarten Armen (12; 112; 209; 309; 409) jeweils ein Freiraum (13; 113; 210; 310; 410) verbleibt, in den das mit dem jeweils anderen Verbindungsflansch (11; 111; 206; 306; 406) verbundene Teil (16; 120; 220; 320; 420) oder der Verbindungflansch selbst eingreift.

3. Elastische Torsionskupplung nach Anspruch 2, **dadurch gekennzeichnet, dass** das mit dem jeweils anderen Verbindungsflansch (11) verbundene Teil der Endbereich mindestens eines Bolzens (16) ist, mit dem eine Lasche (14) in einem Endbereich an dem jeweils anderen Verbindungsflansch (6) befestigt ist.

4. Elastische Torsionskupplung nach Anspruch 2, **dadurch gekennzeichnet, dass** das mit dem jeweils anderen Verbindungsflansch (106, 111; 206, 211; 306, 31; 406, 411) verbundene Teil ein mit mindestens einem radial nach innen verlaufenden Arm (120; 220; 320; 420) versehener Anschlagflansch (117; 217; 317; 417) ist.

5. Elastische Torsionskupplung nach einem der vorhergehenden Ansprüche, **dadurch gekennzeichnet, dass** Laschen (214) in Umfangsrichtung abwechselnd auf gegenüberliegenden Seiten eines radial verlaufenden Bereichs (206b) eines Verbindungsflansches (206) angeordnet sind.

6. Elastische Torsionskupplung nach einem der vorhergehenden Ansprüche, **dadurch gekennzeichnet, dass** sie aus zwei Einzel-Torsionskupplungen (303a, 303b) zusammengesetzt ist, die im Wesentlichen baugleich symmetrisch zu einer Mittelebene und kräftemäßig parallel angeordnet sind.

7. Elastische Torsionskupplung nach einem der vorhergehenden Ansprüche, **dadurch gekennzeichnet, dass** sie bis auf die Öffnungen, die zum Erreichen der Verbindungsflansche (406) erforderlich sind, gekapselt ist.
